# EUROPÄISCHE PATENTANMELDUNG

(11) **EP 2 879 102 A1**
(43) Veröffentlichungstag der Anmeldung: **03.06.2015**
(21) Anmeldenummer: 13195371.3
(22) Anmeldetag: 02.12.2013
(51) Int. Cl.: G07D 11/00

(54) **Geldkassette und Geldautomat**

(71) Anmelder: Wincor Nixdorf International GmbH, 33106 Paderborn (DE)
(72) Erfinder: Schreckenberg, Andreas, 573963 Singapur (SG)
(74) Vertreter: Tanner, Andreas

(57) **Zusammenfassung**

Die vorliegende Erfindung betrifft eine Geldkassette (1), einen Geldautomaten (2) sowie ein Datenübertragungsverfahren zum Übertragen von Daten (4) zwischen einer externen Steuereinheit und einer Geldkassette (1). Die Geldkassette (1) ist für eine mechanische und kommunikationstechnische Installation in einem Geldautomaten (2) ausgestaltet. Sie weist auf ein Lagermodul (11), das zum Lagern einer Anzahl von Geldscheinen (111) ausgestaltet ist, eine in der Geldkassette (1) angeordnete interne Steuereinrichtung (12) zum Steuern der Geldkassette (1), und einen Senderempfänger (13), der an die interne Steuereinrichtung (12) gekoppelt ist und ausgebildet ist, Daten (4) drahtlos an eine Kommunikationsschnittstelle (23) einer außerhalb der Geldkassette (1) befindlichen externen Steuereinheit (21; 3) zu übermitteln und von dieser zu empfangen. Erfindungsgemäß ist der Senderempfänger (13) ausgebildet ist, die Daten (4) gemäß dem Near-Field-Communication-Übertragungsstandard zu übermitteln und zu empfangen.

## Beschreibung

Die vorliegende Erfindung betrifft eine Geldkassette gemäß dem Oberbegriff des Patentanspruchs 1, einen Geldautomaten gemäß dem Obergriff des Patentanspruchs 12 sowie ein Verfahren zum Übertragen von Daten zwischen einem Senderempfänger einer Geldkassette und eine außerhalb der Geldkassette befindlichen externen Steuereinheit gemäß dem Oberbegriff des Patentanspruchs 15.

Eine Geldkassette gemäß dem Oberbegriff des Patentanspruchs 1 ist beispielsweise aus der DE 10 2008 045 602 A1 bekannt. Die dort beschriebene Geldkassette ist für eine mechanische und kommunikationstechnische Installation in einem Geldautomaten ausgestaltet. Die Geldkassette weist, wie üblich, ein Lagermodul zum Lagern einer Anzahl von Geldscheinen auf. Ferner ist, wie ebenfalls üblich, eine in der Geldkassette angeordnete interne Steuereinrichtung zum Steuern der Geldkassette vorgesehen, beispielsweise zum Steuern der Ausgabe und/oder Annahme von Geldscheinen an ein bzw. von einem Geldscheintransportmittel des Geldautomaten. Schließlich umfasst die vorbekannte Geldkassette einen Senderempfänger, der an die interne Steuereinrichtung gekoppelt ist und Daten drahtlos an eine außerhalb der Geldkassette befindliche externe Steuereinheit übermitteln sowie Daten von dieser empfangen kann. Die externe Steuereinrichtung kann Teil des Geldautomaten sein.

In der DE 10 2008 045 602 A1 ist zum einen beschrieben, dass dazu ein RFID-Transponder eingesetzt werden kann. Dabei kann der RFID-Transponder eine eindeutige Kennung aufweisen, die der Geldkassette zugeordnet ist. Ferner wird dort vorgeschlagen, Daten nach einem Standard der Infrared Data Association (IrDA) zu übertragen.

Nachteilig an diesem Verfahren zur Übertragung von Daten zwischen einer Geldkassette und einer externen Steuereinheit ist beispielsweise, dass sowohl IrDA- als auch RFIDbasierte Verbindungen auch über längere Verbindungsstrecken von beispielsweise einigen Metern funktionieren. Dadurch kann die Sicherheit einer derartigen Datenverbindung beeinträchtigt werden. Beispielsweise ist es möglich, dass Daten betreffend die Geldkassette aus der Ferne ausgelesen werden. Insbesondere eine Infrarot-basierte Verbindung kann von einem unberechtigten Dritten leicht angezapft werden. Darüber hinaus ist eine RFID-basierte Verbindung eine im Wesentlichen einseitige Verbindung, was heißt, dass Daten im Wesentlichen nur von der Geldkassette hin zu der externen Steuereinheit übermittelt werden können, nicht jedoch von der externen Steuereinheit zur Geldkassette. Somit können vielleicht Eigenschaften der Geldkassette, wie beispielsweise eine Kennung, via RFID gelesen werden, jedoch ist es nicht möglich, die Geldkassette via RFID zu steuern. Zum Steuern der Geldkassette wäre eine zusätzliche IrDA-Verbindung notwendig.

Die der vorliegenden Erfindung zugrunde liegende Aufgabe ist es daher, eine sichere drahtlose Datenverbindung zwischen einer Geldkassette und einer außerhalb der Geldkassette befindlichen externen Steuereinheit bereitzustellen.

Gemäß einem ersten Aspekt der vorliegenden Erfindung wird diese Aufgabe gelöst durch eine Geldkassette mit den Merkmalen des unabhängigen Patentanspruchs 1. Einen zweiten Aspekt der vorliegenden Erfindung bildet ein Geldautomat mit den Merkmalen des unabhängigen Patentanspruchs 12 und einen dritten Aspekt der vorliegenden Erfindung bildet das Verfahren zum Übertragen von Daten zwischen einem Senderempfänger einer Geldkassette und einer außerhalb der Geldkassette befindlichen externen Steuereinheit gemäß den Merkmalen des unabhängigen Patentanspruchs 15. Merkmale vorteilhafter Weiterbildungen dieser drei Aspekte der vorliegenden Erfindung sind insbesondere in den Unteransprüchen angegeben.

Die vorliegende Erfindung schließt die Erkenntnis ein, dass grundsätzlich eine weitgehend drahtlose Ankopplung einer Geldkassette an den Geldautomaten von Vorteil ist, da auf diese Weise aufwendig zu installierende, in der Herstellung teure sowie mechanisch empfindliche Steckverbinder vermieden bzw. eingespart werden können. Darüber hinaus erleichtert eine weitgehend drahtlose Ankopplung der Geldkassette in einem Geldautomaten die mechanische Aufnahme, da eine weitgehend drahtlose Ankopplung der Geldkassette an den Geldautomaten größere Toleranzen hinsichtlich der Position der Geldkassette erlaubt.

Allerdings weisen die aus dem Stand der Technik vorbekannten Ansätze zur drahtlosen Ankopplung einer Geldkassette an einen Geldautomaten die eingangs genannten Nachteile auf, insbesondere die niedrige Sicherheit, die sich aus der leichten Abhörbarkeit einer Infrarot-basierten Datenverbindung ergibt als auch aufgrund der Tatsache, dass sowohl RFID- als auch Infrarot-basierte Datenverbindungen über längere Verbindungsstrecken, von beispielsweise einigen Metern, grundsätzlich funktionieren. Somit könnte per Fernzugriff auf die RFID- und/oder IrDA- basierte Datenverbindung zugegriffen werden. Ferner wird im Stand der Technik vorgeschlagen, sowohl eine RFIDals auch eine IrDA-basierte Ankopplung vorzusehen, womit zwei gänzlich voneinander verschiedene Protokolle zu beachten sind, was letztlich in einer aufwendigen Hardware und Programmierung von Steuereinrichtungen realisiert. Ferner ist nicht ausgeschlossen, dass eine RFID-Verbindung und eine IrDA-Verbindung sich gegenseitig stören, sofern sie gleichzeitig aktiv sind.

Im Gegensatz dazu ist die Datenverbindung gemäß den Near-Field-Communication-(im folgenden NFC-) Übertragungsstandard universell einsetzbar und deutlich sicherer.

Beispielsweise ist die NFC-basierte Datenverbindung nur dann nutzbar, wenn der Abstand zwischen dem Senderempfänger und der Kommunikationsschnittstelle der externen Steuereinheit weniger als einige Zentimeter, wie beispielsweise 5 cm, beträgt. Bereits dadurch ist die Sicherheit erhöht, weil beispielsweise ein Fremdzugriff via NFC bei bestimmungsgemäßer mechanischer Installation der Geldkassette in einem Geldautomaten wegen der zu großen Distanz zwischen einem fremden NFC-Auslesegerät und dem Senderempfänger der Geldkassette zwangsläufig scheitert. Zur weiteren Erhöhung der Sicherheit können die Daten vor der Übermittlung via NFC in vorteilhafterweise verschlüsselt werden, was an späterer Stelle genauer beschrieben ist.

Darüber hinaus kann die NFC-basierte Verbindung genutzt werden, um sowohl Zustandsinformationen betreffend einen Zustand der Geldkassette auszulesen, als auch um Steuerdaten an die Geldkassette zu übertragen, so dass Vorgänge in der Geldkassette, wie der Betrieb des Lagermoduls, mittels der externen Steuereinheit gesteuert werden können. Ferner ist es möglich, die NFC-basierte Datenverbindung zwischen dem Senderempfänger der Geldkassette und der externen Steuereinheit nicht nur zum bidirektionalen Austausch von Daten einzusetzen, sondern darüber hinaus auch als Energiepfad zu verwenden, sodass Energie von der externen Steuereinheit an die Geldkassette drahtlos übertragen werden kann, die dann in der Geldkassette zum Laden einer Energiespeichereinheit und/oder zum Betreiben einer oder mehrere Komponenten der internen Steuereinrichtung verwendet werden kann. Insoweit müssen keine voneinander verschiedenen Kommunikationsstandards bemüht werden, um die weitgehend drahtlose Kopplung von Geldkassette und Geldautomaten zu erzielen. Sollte die mittels der NFC-basierten Datenverbindung bereitgestellte Energie in einem bestimmten Fall nicht ausreichen, wird die NFC-Datenverbindung optional um eine Energieübertragung mit magnetischer Kopplung nach dem Transformatorprinzip ergänzt, was weiter unten näher beschrieben werden soll.

Nachfolgend sollen die Komponenten der erfindungsgemäßen Geldkassette näher beschrieben werden:

Die Geldkassette gemäß dem ersten Aspekt der vorliegenden Erfindung ist für eine mechanische und kommunikationstechnische Installation in einem Geldautomaten ausgestaltet. Dazu weist die Geldkassette zum einen besagten Senderempfänger für den drahtlosen Austausch von Daten auf und zum anderen Mittel, um von einer Aufnahmeeinrichtung des Geldautomaten aufgenommen werden zu können, beispielsweise Nuten, in die Schienen der Aufnahmeeinrichtung greifen können.

Das Lagermodul der Geldkassette ist zur Lagerung einer Anzahl von Geldscheinen ausgebildet. Bevorzugt werden die Geldscheine von dem Lagermodul automatisch gelagert, also beispielsweise automatisch eingelagert und automatisch ausgegeben. Derartige Vorgänge werden beispielsweise von der internen Steuereinrichtung der Geldkassette gesteuert, die dazu wiederum entsprechende Befehle von der externen Steuereinheit empfangen kann. Beispielsweise lagert das Lagermodul der Geldkassette Geldscheine einer bestimmten Denomination, wie beispielsweise 5 Euro, 10 Euro, 20 Euro, 50 Euro, 100 Euro usw. Die Geldkassette kann beispielsweise eine bestimmte Anzahl der gelagerten Geldscheine an ein entsprechendes Geldscheintransportmittel eines Geldautomaten übergeben, sodass der Geldautomat diese Geldscheine an einen Nutzer des Geldautomaten ausgeben kann. Andersherum kann die Geldkassette beispielsweise auch eine Anzahl von Geldscheinen von dem Geldscheintransportmittel des Geldautomaten übernehmen und automatisch einlagern. Es handelt sich bei der erfindungsgemäßen Geldkassette also bevorzugt um eine elektrisch betreibbare Geldkassette für einen Geldautomaten.

In der Geldkassette ist die interne Steuereinrichtung zum Steuern der Geldkassette angeordnet. Beispielsweise steuert die interne Steuereinrichtung das Lagermodul und dabei die Ein- und Ausgabe von Geldscheinen in das bzw. aus dem Lagermodul. Die interne Steuereinrichtung verfügt beispielsweise über einen Datenspeicher, in dem Zustandsinformationen über Zustände der Geldkassette, beispielsweise hinsichtlich des Bestands, gespeichert werden können. Darüber hinaus ist die interne Steuereinrichtung beispielsweise ausgebildet, ein Entwertungsmittel zum Entwerten sämtlicher Geldscheine sowie eine dazugehöre Sensorik zu betreiben, was an späterer Stelle näher beschrieben werden soll.

An die interne Steuereinrichtung gekoppelt ist der Senderempfänger, der ausgebildet ist Daten gemäß dem NFC-Übertragungsstandard drahtlos an die Kommunikationsschnittstelle der außerhalb der Geldkassette befindlichen externen Steuereinheit zu übermitteln und von dieser zu empfangen. Der Senderempfänger weist dazu beispielsweise eine NFC-Antenne für das Senden und Empfangen von NFC-basierten Daten und ein NFC-Modul zum Verarbeiten der zu sendenden bzw. der empfangenden NFC-basierten Daten. Ein solches NFC-Modul ist in diesem Fall beispielsweise operativ an die interne Steuereinrichtung gekoppelt, sodass die interne Steuereinrichtung Daten zum Zwecke der Versendung an das NFC-Modul übergeben kann und Daten von dem NFC-Modul empfangen kann. Bei dem NFC-Modul handelt es sich beispielsweise um das CR95HF-Modul für den kryptografisch ungesicherten Betrieb und das ST21 NFCA Modul für den kryptografisch gesicherten Betrieb des Unternehmens STMicroelectronics. Für den kryptografisch gesicherten Betrieb kann zusätzlich zum verwendeten Mikrocontroller STM32 ein abgesetztes Secure Element beispielsweise das Modul ST33F1 ergänzt werden.

Im Rahmen der Beschreibung der vorliegenden Erfindung ist, wo von "NFC" bzw. "Near-Field-Communication" die Rede ist, stets der NFC-Übertragungsstandard gemäß NFC ISO / IEC 15693 gemeint.

Die externe Steuereinheit ist ausgebildet, die Daten gemäß dem NFC-Übertragungsstandard unter Verwendung der Kommunikationsschnittstelle zu übermitteln und empfangen. Der Senderempfänger der internen Steuereinrichtung und die Kommunikationsschnittstelle der externen Steuereinheit sind bevorzugt miteinander kompatibel. Der Senderempfänger der Geldkassette ist bevorzugt ein NFC-Senderempfänger und die Kommunikationsschnittstelle der externen Steuereinheit eine NFC-Kommunikationsschnittstelle.

Die externe Steuereinheit ist beispielsweise eine in dem Geldautomaten installierte Steuereinheit, die auch zum Steuern der Geldkassette vorgesehen ist. Die externe Steuereinheit kann jedoch auch in einem mobilen Endgerät, wie beispielsweise einem Smartphone, implementiert sein, das über eine NFC-Kommunikationsschnittstelle verfügt.

Mit dem Adjektiv "intern" sind vorliegend Komponenten bezeichnet, die in bzw. an der Geldkassette angeordnet sind. Das Adjektiv "extern" bezeichnet im Rahmen der Beschreibung der vorliegenden Erfindung Dinge/Mittel, die sich außerhalb der Geldkassette befinden bzw. außerhalb der Geldkassette angeordnet sind, was jedoch nicht ausschließen soll, dass derartige Mittel in dem Geldautomaten angeordnet sein können.

Nachfolgend werden weitere Ausführungsformen der erfindungsgemäßen Geldkassette beschrieben. Die zusätzlichen Merkmale dieser weiteren Ausführungsformen können zur Bildung weiterer Ausführungsvarianten miteinander kombiniert werden, sofern sie nicht ausdrücklich als alternativ zueinander beschrieben sind.

Bei einer bevorzugten Ausführungsform der Geldkassette ist die interne Steuereinrichtung ausgebildet, Zustandsinformationen betreffend einen Zustand der Geldkassette, wie beispielsweise einen Lagerzustand, wie die Anzahl und/oder die Denomination der gelagerten Geldscheine, zu ermitteln. Ferner ist die interne Steuereinrichtung bevorzugt ausgebildet, einen Auslesebefehl der externen Steuereinheit über den Senderempfänger zu empfangen und auf den Empfang des Auslesebefehls hin Daten, die indikativ für die Zustandsinformationen sind, mittels des Senderempfängers an die Kommunikationsschnittstelle zu übermitteln.

Somit können Zustände der Geldkassette in einfacher und sicherer Weise via NFC ausgelesen und gesetzt werden. Beispielsweise kann ein Service-Techniker in einfacher und sicherer Weise mit einem NFC-fähigen mobilen Gerät, wie beispielsweise einem Tablet oder Smartphone, herausfinden, wie viele Geldscheine in welcher Denomination in dem Lagermodul der Geldkassette gelagert sind. Wie bereits oben erläutert, überwacht die interne Steuereinrichtung der Geldkassette einen derartigen Zustand und aktualisiert den Zustand entsprechend der Änderungen. Es ist auch möglich, die interne Steuereinrichtung bei der Einlagerung von Geldscheinen entsprechend zu programmieren. Jedoch ist es bevorzugt, dass die interne Steuereinrichtung den Zustand hinsichtlich der Anzahl der gelagerten Geldscheine und der Denomination der gelagerten Geldscheine automatisch ermittelt und speichert sowie auf Empfang des Auslesebefehls hin über den Senderempfänger diesen in Gestalt entsprechender Daten via NFC an die Kommunikationsschnittstelle der externen Steuereinheit ausgibt. Die Zustandsinformationen können auch indikativ für einen nächsten Wartungstermin, bspw. für eine Energiespeichereinheit oder eine für einen Termin einer Aktivierung/Deaktivierung einer Entwertungseinheit zum Entwerten Zerstörung von Geldscheinen, oder Ähnliches sein. Ferner können die Zustandsinformationen Auskunft darüber erteilen, mit welchem Geldautomaten die Geldkassette kompatibel ist. Außerdem können die Zustandsinformationen indikativ für die räumlichen Abmessungen der Geldscheine sein.

Dadurch, dass Zustandsinformationen via NFC ausgelesen werden können, braucht die Geldkassette nicht mit entsprechenden Etiketten oder anderen Anzeigemitteln versehen werden. Ferner hat diese Ausführungsform den Vorteil, dass das Problem der Zuordnung einer Geldkassette zu einer von einem Kunden angeforderten Stückelung in einem wahlfreien Kassetteneinsteckplatz gelöst wird. Der Geldautomat, in welchem die Geldkassette angeordnet ist, kann also anhand der Zustandsinformationen automatisch erkennen, an welchem Steckplatz des Geldautomaten die Geldkassette gelagert ist. D.h. es erfolgt eine automatische Erkennung, in welchem Steckplatz die jeweilige Geldkassette mit der entsprechenden Denomination vorhanden ist. Fordert bspw. eine Kunde einen bestimmten Geldbetrag in einer bestimmten Stückelung an, so erkennet der Geldautomat automatisch an den Zustandsinformationen der Geldkassetten, welche Geldkassette anzusteuern sind.

Bei einer weiteren bevorzugten Ausführungsform weist die interne Steuereinrichtung einen wiederbeschreibbaren Datenspeicher auf, der ausgebildet ist, empfangene Daten und/oder zu übermittelnde Daten zu speichern. Die zu übermittelnden Daten sind beispielsweise indikativ für besagte Zustandsinformationen. Die empfangenen Daten können insbesondere indikativ für Steueranweisungen sein, die die interne Steuereinrichtung bei der Steuerung der Geldkassette zu berücksichtigen hat. Beispielsweise kann auf dem wiederbeschreibbaren Datenspeicher auch ein Steuerungsprogramm hinterlegt sein, das via NFC von der externen Steuereinheit an die interne Steuereinrichtung mittels der Kommunikationsschnittstelle und des Senderempfängers übertragen worden ist.

Ferner weist die Geldkassette bevorzugt ein Geldscheinausgabemittel auf, das für eine Ankopplung an ein Geldscheintransportmittel des Geldautomaten und zur Ausgabe einer bestimmten Anzahl der Gelscheine an das Geldscheintransportmittel ausgestaltet ist. Dabei ist die interne Steuereinrichtung bevorzugt ausgebildet, einen Geldausgabebefehl der externen Steuereinheit über den Senderempfänger zu empfangen und auf den Empfang des Geldausgabebefehls hin die bestimmte Anzahl der Geldscheine an das Geldscheintransportmittel des Geldautomaten auszugeben.

Das Geldscheinausgabemittel der Geldkassette ist also bevorzugt operativ an die interne Steuereinrichtung gekoppelt und ausgestaltet, über diese von der externen Steuereinheit gesteuert zu werden. Ferner ist es bevorzugt, dass das Geldscheinausgabemittel auch zur Einlagerung einer bestimmten Anzahl von Geldscheinen ausgestaltet ist. Auch diese Einlagerung einer bestimmten Anzahl von Geldscheinen wird bevorzugt durch die interne Steuereinrichtung gesteuert. Die Geldscheinausgabevorgänge und Geldscheineinlagerungsvorgänge werden bevorzugt von der internen Steuereinrichtung überwacht und Daten betreffend den Lagerzustand der Geldkassette automatisch aktualisiert.

Demnach kann ein vollständiger Geldscheineinlagerungsvorgang und/oder ein vollständiger Geldscheinausgabevorgang in der Geldkassette von extern her mittels NFC gesteuert werden.

Bei einer weiteren bevorzugten Ausführungsform ist der Senderempfänger der Geldkassette ausgebildet, ein externes Hochfrequenzsignal gemäß dem NFC-Übertragungsstandard zu empfangen und das empfangene Hochfrequenzsignal in einen ersten Ladestrom zu wandeln. Der Senderempfänger ist bevorzugt ferner ausgebildet, den ersten Ladestrom zum Zwecke der Energieversorgung bereitzustellen, beispielsweise direkt der internen Steuereinrichtung und/oder direkt einer daran gekoppelten Sensorik und/oder einer Energiespeichereinheit der Geldkassette. Zumindest ein Teil der Energieversorgung der Geldkassette wird als bevorzugt drahtlos via NFC bereitgestellt. Beispielsweise kann über eine derartige NFC-basierte Energieversorgung der Energieverbrauch eines oder mehrerer in der Geldkassette angeordneter Sensoren abdeckt werden.

Der erste Ladestrom weist beispielsweise eine Stromstärke von 0,3 mA bis 6 mA bei einer Spannung von 2 V auf. Eine derartige Leistung reicht für den Betrieb einiger Sensortypen, wie beispielsweise ein Füllstandsensor, aus.

Somit kann über die NFC-basierte Ankopplung der Geldkassette in dem Geldautomaten zum einen ein bidirektionaler Datenaustausch stattfinden, und zum anderen ein unidirektionaler Transfer von Hochfrequenzleistung von dem Geldautomaten zur Geldkassette erfolgen. Darüber hinaus ist es möglich, die restliche Energieversorgung vollständig induktiv, also über entsprechende Transformatormittel drahtlos in der Geldkassette bereitzustellen, was weiter unten näher beschrieben ist.

Bei einer weiteren bevorzugten Ausführungsform umfasst die interne Steuereinrichtung der Geldkassette ein Kryptographiemittel, das ausgebildet ist, empfangene Daten zu entschlüsseln und zu übermittelnde Daten zu verschlüsseln. Auch auf diese Weise kann der Schutz vor Fremdzugriff erhöht werden. Der NFC-Übertragungsstandard erlaubt in vorteilhafter Weise, die Daten zu verschlüsseln. Das Kryptographiemittel kann auch in dem Senderempfänger implementiert sein.

Die Geldkassette weist ferner bevorzugt ein Entwertungsmittel auf, das ausgebildet ist, die gelagerte Anzahl von Geldscheinen zu entwerten, wobei die interne Steuereinrichtung ausgebildet ist, mittels des Senderempfängers einen Entwertungsbefehl zu empfangen und auf den Empfang des Entwertungsbefehls hin das Entwertungsmittel zu veranlassen, die Anzahl von Geldscheinen zu entwerten.

Das Entwertungsmittel umfasst beispielsweise einen Farbstoff, den das Entwertungsmittels auf Befehl hin über sämtliche der gelagerten Geldscheine verteilt, so dass diese dadurch entwertet werden. Jedoch ist die vorliegende Erfindung auf kein bestimmtes Entwertungsmittel beschränkt. Wesentlich ist vielmehr, dass der Entwertungsbefehl bevorzugt unter Verwendung der NFC-Technologie generiert wird. Beispielsweise ist es möglich, dass die externe Steuereinheit einen Entwertungsbefehl per NFC an den Senderempfänger der Geldkassette übermittelt. Diese Variante ist beispielsweise zweckmäßig, wenn der Geldautomat, in dem die Geldkassette installiert sein kann, detektiert, dass unautorisierter Fremdzugriff auf den Geldautomaten erfolgt. Bei einer bevorzugten Variante ist der Senderempfänger der Geldkassette alternativ oder zusätzlich zu dem Empfangen des Entwertungsbefehls ausgebildet, zu detektieren, dass der Abstand zwischen dem Senderempfänger und der Kommunikationsschnittstelle der externen Steuereinheit einen Mindestabstand, wie beispielsweise 2 cm, überschritten hat und in Reaktion auf die Detektion eines derartigen Überschreitens hin den Entwertungsbefehl zu generieren und an die interne Steuereinrichtung zu übermitteln, so dass diese das Entwertungsmittel veranlassen kann, die Anzahl von Geldscheinen zu entwerten. Das Generieren des Entwertungsbefehls, sei es durch den Senderempfänger selbst oder durch die externe Steuereinheit, kann nicht nur auf der Detektion des Überschreitens des Mindestabstandes basieren, sondern auch auf der Detektion einer anderen Unregelmäßigkeit, die indikativ für das Vorliegen eines unautorisierten Fremdzugriffs ist. Die NFC-Technologie bietet hier eine Vielzahl voneinander verschiedener Möglichkeiten.

Beispielsweise weist die interne Steuereinrichtung der Geldkassette einen Füllstandsensor auf, der ausgebildet ist, einen Füllstand des Entwertungsmittels, des Energiespeichers und/oder eine aktuelle gelagerte Menge von Geldscheinen zu detektieren. Beispielsweise stellt der Füllstandsensor der internen Steuereinrichtung ein Füllstandssignal bereit, das indikativ für eine geringe Menge von Farbstoff ist. Die interne Steuereinrichtung ist bevorzugt ausgebildet, dieses Füllstandssignal oder ein daraus abgeleitetes Signal mittels des Senderempfängers via NFC an die externe Steuereinheit zu übertragen. Die externe Steuereinheit kann das empfangene Signal zusammen mit einer Kennung, wie eine Seriennummer, der Geldkassette beispielsweise an ein Wartungscenter übermitteln, so dass eine Nachbefüllung des Entwertungsmittels automatisch in die Wege geleitet werden kann. Beispielsweise wird der Füllstandssensor mittels des ersten Ladestroms mit Energie, die für seinen Betrieb erforderlich ist, versorgt.

Es ist bevorzugt, dass der Senderempfänger ausgebildet ist, die Daten gemäß dem NFC-Übertragungsstandard nur dann zu übermitteln und zu empfangen, wenn ein Abstand zwischen dem Senderempfänger der Geldkassette und der Kommunikationsschnittstelle der externen Steuereinheit, kleiner ist als ein Mindestabstand, wie einige Zentimeter.

Bei einer bevorzugten Ausführungsform umfasst der Senderempfänger ein NFC-Tag. Ein derartiges Signalisierungs-Tag erleichtert die Identifikation der Geldkassette sowie das Auslesen von Zustandsinformationen. Der NFC-Tag kann Teil des besagten Datenspeichers sein oder den besagten Datenspeicher umfassen. Bei einer bevorzugten Ausführungsform handelt es sich bei dem Datenspeicher um ein NFC-EEPROM. Ein darin enthaltener Identifizierer (Unique Identifier (UID)) kann dabei als Kennung der Geldkassette verwendet werden. Bevorzugt ist das NFC-EEPROM ausgebildet, als NFC-Tag zu operieren.

Bei einer weiteren bevorzugten Ausführungsform umfasst die Geldkassette ferner ein internes Transformatormittel, das ausgebildet ist, ein externes elektromagnetisches Feld in einen zweiten Ladestrom zu wandeln und einer Energiespeichereinheit der Geldkassette zuzuführen. Das externe elektromagnetische Feld muss nicht auf der Verwendung der NFC-Technologie basieren, sondern kann beispielsweise von einem herkömmlichen externen Transformatormittel stammen. Das externe Transformatormittel, das beispielsweise in dem Geldautomaten angeordnet ist, bildet gemeinsam mit dem internen Transformatormittel einen Transformator aus, mittels dem elektrische Energie übertragen werden kann, sofern der Abstand zwischen den beiden Transformatormitteln nicht mehr als einige Zentimeter beträgt. Somit kann die Energiespeichereinheit der Geldkassette, die beispielsweise eine Batterie und/oder einen Akkumulator umfasst, geladen werden. Somit können auch verbrauchsstärkere Komponenten der Geldkassette, wie beispielsweise das Lagermodul und/oder das Geldscheinausgabemittel, drahtlos von extern her mit Energie versorgt werden. Im Ergebnis kann die Geldkassette also in besonders einfacher Weise, nämlich nahezu weitgehend drahtlos, kommunikationstechnisch und energieversorgungstechnisch in einem Geldautomaten installiert werden.

Gemäß einem zweiten Aspekt der vorliegenden Erfindung wird ein Geldautomat vorgeschlagen. Der Geldautomat des zweiten Aspektes der vorliegenden Erfindung weist eine Aufnahmeeinrichtung zur Aufnahme einer Anzahl von Geldkassetten gemäß dem ersten Aspekt der vorliegenden Erfindung auf. Ferner umfasst der Geldautomat eine Steuereinheit, die ausgebildet ist, mittels einer an die Steuereinheit gekoppelten Kommunikationsschnittstelle Daten drahtlos an die Senderempfänger der Geldkassetten zu übermitteln und von diesen zu empfangen. Erfindungsgemäß ist die Steuereinheit des Geldautomaten ausgebildet, die Daten mittels der Kommunikationsschnittstelle gemäß dem NFC-Übertragungsstandard zu übermitteln und zu empfangen. Der Geldautomat des zweiten Aspektes der vorliegenden Erfindung teilt die Vorteile der Geldkassette des ersten Aspektes der Erfindung. Bevorzugte Ausführungsformen des Geldautomaten entsprechen sinngemäß den bevorzugten Ausführungsformen der Geldkassette, insbesondere wie sie in den abhängigen Ansprüchen definiert sind.

Bei einer bevorzugten Ausführungsform des Geldautomaten ist die Kommunikationsschnittstelle zu den Senderempfängern der Anzahl von Geldkassetten kompatibel. Die Kommunikationsschnittstelle und die Senderempfänger sind also aufeinander angepasst. Beide operieren bevorzugt gemäß dem NFC-Übertragungsstandard.

Bei einer Ausführungsform ist der Geldautomat ausgebildet, eine Vielzahl von Geldkassetten aufzunehmen, beispielsweise vier Geldkassetten. Dabei ist es bevorzugt, dass die Kommunikationsschnittstelle Antennen zum Empfangen und Übermitteln der Daten aufweist, wobei jeder Antenne jeweils eine der Anzahl von Geldkassetten zugeordnet ist, also jeweils ein Senderempfänger, und die Antennen mittels eines Multiplexers an die Steuereinheit gekoppelt sind. Zum Empfangen und Übermitteln der Daten an die Geldkassetten sind also gesonderte Antennen vorgesehen. Jedoch kann aufgrund des Multiplexers auf den Einsatz einer Vielzahl von gesonderten NFC-Modulen verzichtet werden, sondern ein einziges NFC-Modul kann Daten, die an eine oder an mehrere oder an alle Senderempfänger zu übermitteln sind verarbeiten und Daten, die von einer, mehrerer oder allen Senderempfänger stammen, ebenfalls verarbeiten. Auf diese Weise kann Hardware eingespart werden und der Stromverbrauch des Geldautomaten gesenkt werden.

Gemäß einem dritten Aspekt der vorliegenden Erfindung wird ein Verfahren zum Übertragen von Daten zwischen einem Senderempfänger einer Geldkassette, die für eine mechanische und kommunikationstechnische Installation in einem Geldautomaten ausgestaltet ist, und einer Kommunikationsschnittstelle einer außerhalb der Geldkassette befindlichen externen Steuereinheit vorgeschlagen. Erfindungsgemäß werden die Daten gemäß dem Near-Field-Communication-Übertragungsstandard übertragen. Das Verfahren des dritten Aspektes teilt die Vorteile der Geldkassette des ersten Aspektes der Erfindung und die Vorteile des Geldautomaten des zweiten Aspektes der Erfindung. Bevorzugte Ausführungsformen des Verfahrens entsprechen der bevorzugten Ausführungsform der oben beschriebenen Geldkassette und des oben beschriebenen Geldautomaten, insbesondere, wie sie in den abhängigen Ansprüchen definiert sind.

Das Übertragen von Daten zwischen der externen Steuereinheit und der internen Steuereinrichtung schließt bei einer bevorzugten Ausführungsform ein Ausführen eines Authentisierungsverfahrens ein. Erst nach einem erfolgreichen Abschluss des Authentisierungsverfahren, aus dem hervorgeht, dass die externe Steuereinheit autorisiert ist, Daten von der Geldkassette zu empfangen und/oder Daten an die Geldkassette zu übermitteln, erfolgt das Übermitteln und/oder Empfangen von Daten.

Der der Erfindung zugrunde liegende Gedanke soll nachfolgend anhand der in den Figuren dargestellten Ausführungsbeispiele näher erläutert werden. Es zeigen:
- Fig. 1: eine schematische und exemplarische Darstellung einer Ausführungsform einer erfindungsgemäßen Geldkassette;
- Fig. 2: eine schematische und exemplarische Darstellung einer Ausführungsform eines erfindungsgemäßen Geldautomaten;
- Fig. 3: eine schematische und exemplarische Darstellung einer Kommunikationsschnittstelle, die an eine externe Steuereinheit gekoppelt ist; und
- Fig. 4: eine schematische und exemplarische Darstellung einer externen Steuereinheit in Gestalt eines mobilen Endgeräts, das mit einer Geldkassette Daten gemäß dem NFC-Übertragungsstandard austauscht.

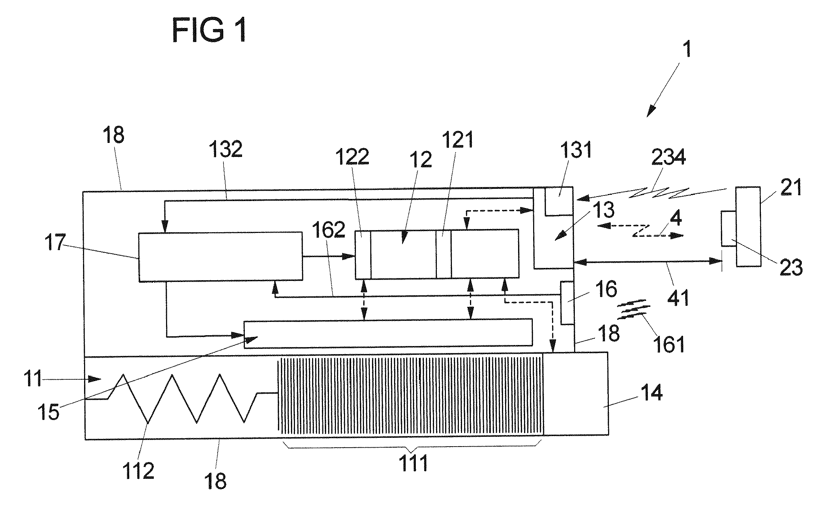

Fig. 1 zeigt eine schematische und exemplarische Darstellung einer Ausführungsform einer erfindungsgemäßen Geldkassette 1.

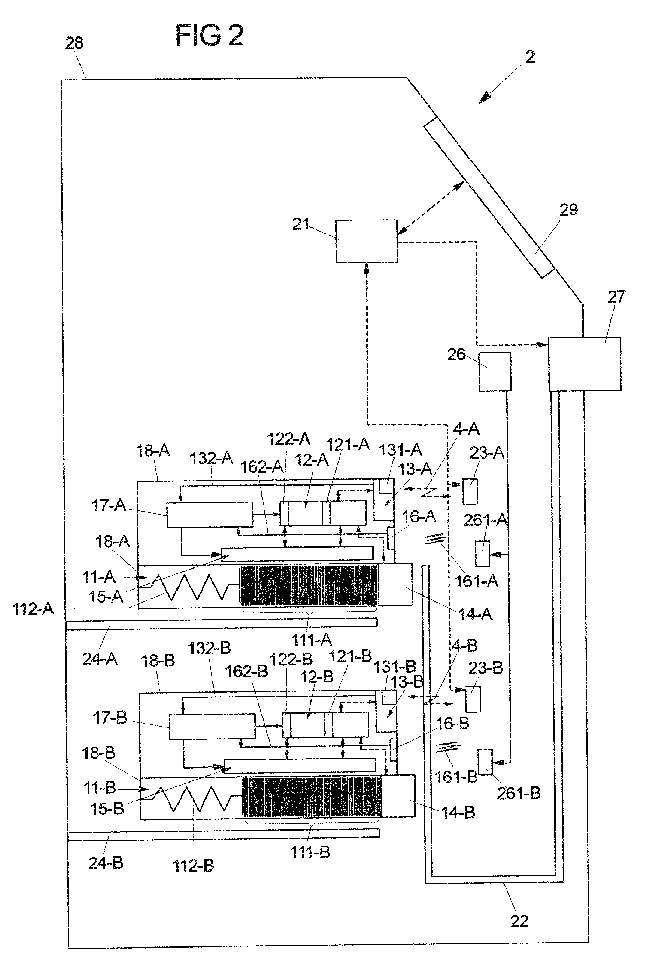

Die Geldkassette 1 ist für eine mechanische und kommunikationstechnische Installation in einem Geldautomaten ausgestaltet. Eine Ausführungsform eines erfindungsgemäßen Geldautomaten 2 ist schematisch und exemplarisch in der Fig. 2 dargestellt.

Nachfolgend soll zunächst die Geldkassette 1 näher beschrieben werden, sodann wird auf die konkrete Ausgestaltung des beispielhaften Geldautomaten 2 eingegangen. Auf beide Figuren wird nachfolgend Bezug genommen. In allen Fig. 1 bis 4 sind Pfade, über die ein Signal zur Energieversorgung, wie ein elektrischer Strom oder eine elektrische Spannung, übertragen werden, mit einem durchgehenden Pfeil gekennzeichnet. Pfade, über die Daten, wie Steuersignale, Zustandsinformationen und dergleichen übertragen werden, sind mit gestrichelten Pfeilen gekennzeichnet.

Zunächst umfasst die Geldkassette 1 ein innerhalb eines Gehäuses 18 angeordnetes Lagermodul 11, das eine Anzahl von Geldscheinen 111 lagert. Die Geldscheine 111, die jeweils eine bestimmte Denomination und jeweils eine entsprechende Abmessung aufweisen, werden von einem Haltemittel 112 in dem Lagermodul gelagert. Ferner weist die Geldkassette 1 ein Geldscheinausgabemittel 14 auf, das für eine Ankopplung an ein Geldscheintransportmittel 22 des Geldautomaten 2 (s. Fig. 2) und zur Ausgabe einer bestimmten Anzahl der Geldscheine 111 an das Geldscheintransportmittel 22 ausgestaltet ist. Nach Übergabe der bestimmten Anzahl der Geldscheine 111 an das Geldscheintransportmittel 22 transportiert das Geldscheintransportmittel 22 die ausgegebenen Geldscheine 111 an ein Ein-Ausgabemittel 27 des Geldautomaten 2. Das Geldscheinausgabemittel 14 kann ebenso Geldscheine von dem Geldscheintransportmittel 22 annehmen und in dem Lagermodul 11 lagern.

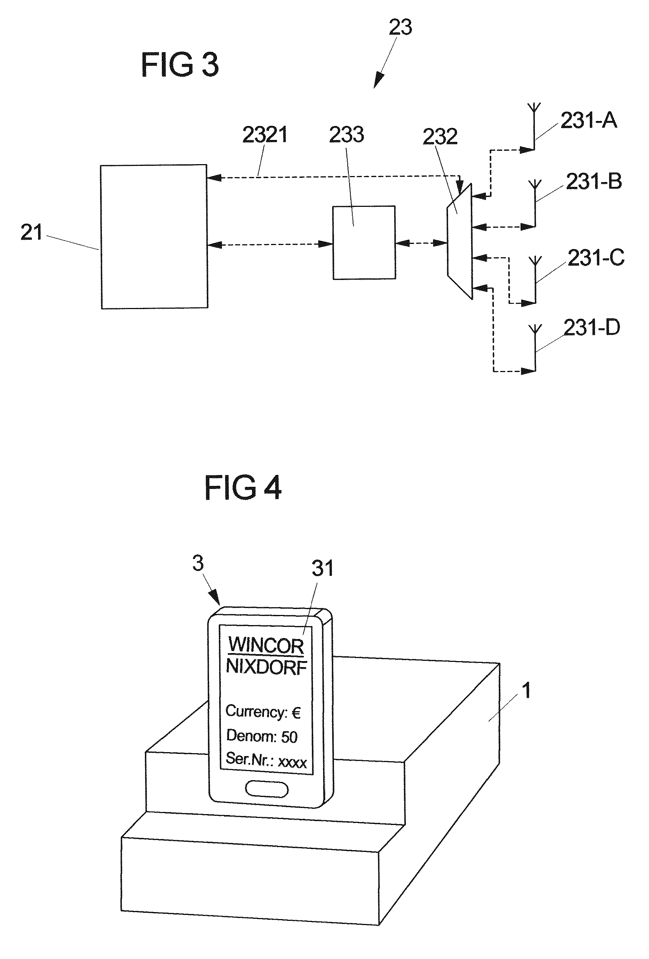

Zum Steuern der Geldkassette 1 ist eine in der Geldkassette 1 angeordnete interne Steuereinrichtung 12 vorgesehen. Der internen Steuereinrichtung 12 zugeordnet sind ein Datenspeicher 121 sowie ein Füllstandsensor 122. An die interne Steuereinrichtung 12 gekoppelt ist ein Senderempfänger 13, der Daten 4 drahtlos an eine außerhalb der Geldkassette 1 befindliche externe Steuereinheit 21 übermittelt und von dieser empfängt. Die externe Steuereinheit 21 ist beispielsweise auf einen in der Fig. 4 schematisch und exemplarisch dargestellten mobilen Endgeräte 3 implementiert und/oder in dem Geldautomaten 2 (s. Fig. 2). Ihrerseits ist die externe Steuereinheit 21 an eine Kommunikationsschnittstelle 23 gekoppelt. Über diese Kommunikationsschnittstelle 23 kann die externe Steuereinheit 21 Daten 4 an den Senderempfänger 13 senden und von diesem empfangen. Umgekehrt kann der Senderempfänger 13 die Daten 4 an die Kommunikationsschnittstelle 23 senden und von dieser empfangen. Der Senderempfänger 13 und die Kommunikationsschnittstelle 23 sind also miteinander kompatibel.

Der Senderempfänger 13 übermittelt die Daten an die Kommunikationsschnittstelle 23 gemäß dem Near-Field-Communication-Übertragungsstandard, im Folgenden NFC-Übertragungsstandard. Ebenso übermittelt die Kommunikationsschnittstelle 23 die Daten 4 an den Senderempfänger 13 gemäß dem NFC-Übertragungsstandard. Ein Austausch von Daten 4 zwischen der Kommunikationsschnittstelle 23 und dem Senderempfänger 13 ist nur dann möglich, wenn ein Abstand 41 zwischen dem Senderempfänger 13 und der Kommunikationsschnittstelle 23 einen bestimmten Mindestabstand nicht überschreitet. Dieser Mindestabstand liegt bei beispielsweise einigen Zentimeter, wie maximal 5 cm oder 2 cm.

Mittels der Kommunikationsschnittstelle 23 kann die externe Steuereinheit 21 Zustandsinformationen betreffend die Geldkassette 1 auslesen. Diese Zustandsinformationen sind beispielsweise indikativ für die Anzahl der gelagerten Geldscheine 111 und/oder eine Denomination der Geldscheine 111 und/oder einen Wartungstermin und/oder für einen bestimmten Defekt in der Geldkassette 1. Die interne Steuereinrichtung 12 ist ausgebildet, derartige Zustandsinformationen zu ermitteln und in dem dafür vorgesehene Datenspeicher 121 in Gestalt von Daten abzulegen. Die interne Steuereinrichtung 12 empfängt beispielsweise einen Auslesebefehl der externen Steuereinheit 21 mittels des Senderempfängers 13 und stellt auf Empfang des Auslesebefehls hin der externen Steuereinheit 21 die Zustandsinformationen mittels des Senderempfängers 13 bereit. Die interne Steuereinrichtung 12 übermittelt also Daten 4, die indikativ für die angeforderten Zustandsinformationen sind, gemäß dem NFC-Übertragungsstandard an die Kommunikationsschnittstelle 23, die an die externe Steuereinheit 21 gekoppelt ist.

Auf dem besagten Datenspeicher 121 können nicht nur Zustandsinformationen gespeichert werden, sondern auch Steuerprogramme o.ä. Derartige Steuerprogramme können von extern mittels der externen Steuereinheit 21 übertragen werden. In dem Datenspeicher 121 ist also beispielsweise ein Steuerprogramm abgespeichert, gemäß dem die interne Steuereinrichtung 12 Vorgänge in der Geldkassette 1 steuert. Der Datenspeicher 121 kann beispielsweise ein wiederbeschreibbarer Datenspeicher sein.

Über den Senderempfänger 13 können nicht nur Zustandsinformationen der Geldkassette 1 ausgelesen werden. Beispielsweise empfängt die interne Steuereinrichtung 12 mittels des Senderempfängers 13 einen Geldausgabebefehl, den die externe Steuereinheit 21 gemäß dem NFC-Übertragungsstandard übermittelt hat. Auf dem Empfang des Geldausgabebefehls hin steuert die interne Steuereinrichtung 12 das Geldscheinausgabemittel 14 derart, dass die angeforderte Anzahl von Geldscheinen 111 an das Geldscheintransportmittel 22 des Geldautomaten 2 übergeben werden. Nach der Ausgabe der Geldscheine 111 aktualisiert die interne Steuereinrichtung 12 ihren Zustand, in dem die in dem Datenspeicher 121 abgelegten Zustandsinformationen entsprechend der aktuell gelagerten Anzahl von Geldscheinen 111 angepasst werden.

Der Senderempfänger 13 kann ferner ein externes Hochfrequenzsignal 234 empfangen, das von der externen Steuereinheit 21 mittels der Kommunikationsschnittstelle 23 bereitgestellt wird. Auch das externe Hochfrequenzsignal 234 wird von der externen Steuereinheit 21 gemäß dem NFC-Übertragungsstandard an die Geldkassette 1 übermittelt. Der Senderempfänger kann das empfangene Hochfrequenzsignal 234 in einen ersten Ladestrom 132 wandeln, um beispielsweise damit Komponenten des Senderempfängers 13, wie beispielsweise ein NFC-Tag 131 und/oder den Füllstandssensor 122, mit Energie zu versorgen. Alternativ oder zusätzlich führt der Senderempfänger 13 den ersten Ladestrom 132 einer Energiespeichereinheit 17 der Geldkassette 1 zu. Diese Energiespeichereinheit 17 kann beispielsweise eine Batterie, einen Kondensator und/oder einen andersartigen Akkumulator als Energiespeicher umfassen.

In dem NFC-Tag 131 kann beispielsweise eine Kennung der Geldkassette 1 gespeichert sein. Diese Kennung kann identisch mit einer Identifikationsnummer des NFC-Tags sein.

Die Daten 4 können optional verschlüsselt zwischen dem Senderempfänger 13 und der Kommunikationsschnittstelle 23 übertragen werden. Dazu umfasst die Geldkassette 1 ein in der Fig. 1 nicht dargestelltes Kryptographiemittel, um zu übermittelnde Daten 4 zu verschlüsseln und empfangene Daten 4 zu entschlüsseln.

Die Geldkassette 1 umfasst ferner ein Entwertungsmittel 15, das ausgebildet ist, die gelagerte Anzahl von Geldscheinen 111 zu entwerten. Die interne Steuereinrichtung empfängt beispielsweise mittels des Senderempfängers 13 einen Entwertungsbefehl von der externen Steuereinheit 21 und veranlasst auf Empfang des Entwertungsbefehls hin das Entwertungsmittel 15, die Anzahl von Geldscheinen 111 zu entwerten. Dies kann beispielsweise dadurch geschehen, dass das Entwertungsmittel 15 einen Farbstoff über sämtlich Geldscheine 111 verteilt, sodass diese entwertet werden. Zum Überwachen eines Füllstands des in dem Entwertungsmittel 15 enthaltenen Farbstoffs ist der Füllstandssensor 122 vorgesehen, der beispielsweise der Steuereinrichtung 12 einen niedrigen Farbstofffüllstand meldet. Ein niedriger Farbstofffüllstand kann beispielsweise als Zustandsinformationen in dem Datenspeicher 121 gespeichert werden und bei einem folgenden Auslesevorgang an die externe Steuereinheit 21 kommuniziert werden. Auf diese Weise kann sichergestellt werden, dass die Geldkassette 1 stets ein Entwertungsmittel mit ausreichendem Farbstoff umfasst.

Bereits oben wurde erläutert, dass ein Teil der Energieversorgung mittels des Hochfrequenzsignals 234 von extern her in die Geldkassette eingekoppelt werden kann. Dieses externe Hochfrequenzsignal 234 wird ebenfalls, also wie die Daten 4, gemäß dem NFC-Übertragungsstandard an die Geldkassette 1 übermittelt. Jedoch ist die Leistung eines derartigen NFC- basierten Hochfrequenzsignals begrenzt, sodass möglicherweise nicht sämtliche Komponenten der Geldkassette 1 mittels dieses Signals 234 mit Energie versorgt werden können. Daher umfasst die Geldkassette 1 ein internes Transformatmittel 16, das ein externes elektromagnetisches Feld 161 in einen zweiten Ladestrom 162 wandelt und der Energiespeichereinheit 17 der Geldkassette zuführt. Beispielsweise wird dieses externe elektromagnetische Feld 161 von einem externen Transformatormittel bereitgestellt. Ein derartiges externes Transformatormittel ist in der Fig. 2 schematisch dargestellt und mit der Bezugsziffer 261 gekennzeichnet. Auf diese Weise kann die Geldkassette 1 leitungsfrei, also drahtlos, in dem Geldautomaten 2 sowohl kommunikationstechnisch als auch energieversorgungstechnisch angekoppelt werden.

Nun soll der Geldautomat 2 mit Bezug auf die Fig. 2 und 3 näher beschrieben werden: Der Geldautomat 2 weist ein Gehäuse 28 auf. Auch in der Fig. 2 sind Pfade, über die Energiesignale, wie beispielsweise eine elektrische Spannung oder ein elektrischer Strom, übertragen werden, mit durchgehenden Pfeilen gekennzeichnet und Pfade, über die Daten, wie Steuersignale, Zustandsinformationen und dergleichen zwischen den Komponenten übertragen werden, mit gestrichelten Pfeilen.

Der Geldautomat 2 ist ausgebildet, mehrere Geldkassetten 1-A und 1-B aufzunehmen. Die Geldkassetten 1-A und 1-B weisen jeweils einen Aufbau auf, der im Wesentlichen dem Aufbau der in Fig. 1 dargestellten Geldkassette 1 entspricht. Zur Aufnahme der Geldkassetten 1-A und 1-B weist der Geldautomat 2 Aufnahmemittel 24-A und 24-B auf. Diese Aufnahmemittel 24-A und 24-B sind in der Fig. 2 nur schematisch dargestellt. Hier kann es sich beispielsweise um Schienen handeln, auf die eine jeweilige Geldkassette 1-A und 1-B aufgelegt und in den Geldautomaten 2 eingeschoben werden kann. Auf die genaue Ausgestaltung der Aufnahmemittel 24-A und 24-B kommt es vorliegend weniger an.

Hinsichtlich der Energieversorgung und der Kommunikation sind die Geldkassetten 1-A und 1-B aufgrund der Senderempfänger 13-A und 13-B sowie der internen Transformatormittel 16-A und 16-B vollständig drahtlos an entsprechende Komponenten 23-A, 23-B, 261-A und 261-B des Geldautomaten 2 gekoppelt. Dies erleichtert die Installation der Geldkassetten 1-A und 1-B in dem Geldautomaten 2. Zum Ausgeben von Geldscheinen 111-A (beispielsweise Scheine einer ersten Denomination) und Geldscheinen 111-B (beispielsweise Scheine einer zweiten, von der ersten verschiedenen Denomination) ist in dem Geldautomaten 2 besagtes Geldscheintransportmittel 22 vorgesehen, das die Geldscheinausgabemittel 14-A und 14-B der Geldkassetten 1-A und 1-B an das Ein-Ausgabemittel 27 des Geldautomaten 2 koppelt.

Zur Ein- und Ausgabe von Geldscheinen empfängt der Geldautomat 2 beispielsweise über eine Benutzerschnittstelle 29 entsprechende Benutzerbefehle. Eine Steuereinheit 21 empfängt diese Benutzerbefehle und verarbeitet sie entsprechend. Beispielsweise übermittelt die Steuereinheit 21 mittels der dafür vorgesehenen Kommunikationsschnittstelle 23-A und 23-B in Abhängigkeit der empfangenen Benutzerbefehle Geldscheinausgabebefehle an die Senderempfänger 13-A und 13-B. Wie bereits erläutert, erfolgt diese drahtlose Übertragung von Daten gemäß dem NFC-Übertragungsstandard. Ihrerseits stellen die Geldkassetten 1-A und 1-B den empfangenen Geldscheinausgabebefehl mittels der Senderempfänger 13-A bzw. 13-B den internen Steuereinrichtungen 12-A und 12-B bereit. Die internen Steuereinrichtungen 12-A und 12-B steuern die Geldscheinausgabemittel 14-A und 14-B sodann derart, dass die angeforderte Menge von Geldscheinen 111-A und 111-B an das Geldscheintransportmittel 22 übergeben werden, welches folglich die übergebenen Geldscheine an das Ein-Ausgabemittel 27 überträgt. Bei der Einzahlung von Geldscheinen wird analog verfahren.

Um die Geldkassetten 1-A und 1-B mit Energie zu versorgen, weist der Geldautomat 2 eine Stromversorgung 26 auf. Diese Stromversorgung ist an Transformatormittel 261-A und 261-B gekoppelt. Diese Transformatormittel 261-A und 261-B sind in Bezug auf die Geldkassetten 1-A und 1-B extern von diesen angeordnet, und zwar derart, dass sie gemeinsam mit den internen Transformatormitteln 16-A und 16-B einen Transformator bilden, sodass die internen Transformatormittel 16-A und 16-B von den externen Transformatormittels 261-A und 261-B bereitgestellte elektromagnetische Felder 161-A bzw. 161-B empfangen können und in entsprechende zweite Ladeströme 162-A bzw. 162-B wandeln können. Beispielsweise bilden die externen Transformatormittel 261-A und 261-B eine jeweilige Primärseite und die internen Transformatormittel 16-A und 16-B eine jeweilige Sekundärseite des durch die jeweils zwei Transformatormittel 16-A und 261-A bzw. 16-B und 261-B gebildeten Transformators.

Nachfolgend soll mit Bezug auf die Fig. 3 der Aufbau einer Kommunikationsschnittstelle 23 der externen Steuereinheit 21 näher erläutert werden. Zunächst zeigt die Fig. 3 in schematischer Weise die Steuereinheit 21 des Geldautomaten 2. Um die Daten gemäß dem NFC-Übertragungsstandard an die Geldkassetten 1-A und 1-B und ggf. weitere Geldkassetten zu übertragen sind Antennen 231-A, 231-B, 231-C und 231-D vorgesehen, also insgesamt vier Antennen zur Übertragung von Daten an insgesamt vier Geldkassetten. Es könnte aber auch mehrere oder weniger Geldkassetten, sprich also auch mehrere oder weniger Antennen vorgesehen sein. Jedenfalls ist jede Antenne, 231-A bis 231-D jeweils einer Geldkassette zugeordnet. Beispielsweise ist die Geldkassette 1-A der Antenne 231-A zugeordnet und die Geldkassette 1-B der Antenne 231-B usw. Sämtlichen Antennen sind mittels eines Multiplexers 232 an die Steuereinheit 21 gekoppelt. Zur Verarbeitung der empfangenen Daten, die gemäß dem NFC-Übertragungsstandard an die Antennen 231-A bis 231-D übertragen worden sind, ist ein NFC-Modul 233 vorgesehen. Dieses NFC-Modul wandelt die empfangenen Daten in eine Form, die für die Steuereinheit 21 lesbar sind. Umgekehrt wandelt das NFC-Modul 233 zu übermittelnde Daten, die das NFC-Modul 233 von der Steuereinheit 21 erhalten hat, in NFC-Daten, die dann mittels des Multiplexers 232 an eine oder mehrere der Antennen 231-A bis 231-D übermittelt werden, die diese dann an die entsprechenden Antennen der Senderempfänger der Geldkassetten übertragen. Der Multiplexer 232 wird von der Steuereinheit 21 mittels eines Multiplexersteuersignals 2321 gesteuert.

Aufgrund der Verwendung des Multiplexers 232 kann die Anzahl der einzusetzenden NFC-Module reduziert werden. Wie die Fig. 3 schematisch verdeutlicht, ist zur Bedienung von vier Antennen 231-A bis 231-D, also zur Steuerung von vier Geldkassetten lediglich ein NFC-Modul 233 erforderlich. Auf diese Weise können Kosten eingespart werden, sowie der gesamte Energieverbrauch des Geldautomaten 2 verringert werden.

Schließlich zeigt die Fig. 4 in schematischer Weise die Geldkassette 1, die unter Verwendung des NFC-Übertragungsstandards mit einer externen Steuereinheit 3 in Gestalt eines mobilen Endgeräts, wie einem Smartphone, kommuniziert. Viele der heutigen üblichen Smartphones verfügen über Mittel, um Daten gemäß dem NFC-Übertragungsstandards auszutauschen. So kann auf dem mobilen Endgerät 3 eine einfache App programmiert sein, die ein Kommunizieren mit der Geldkassette 1, zumindest aber ein Auslesen von Zustandsinformationen erlaubt. So ist es möglich, einen Zustand der Geldkassette 1 mittels des mobilen Endgeräts 3 auszulesen und auf einem Anzeigemittel 31 des mobilen Endgeräts anzeigen zu lassen. Bei dem dargestellten Beispiel lagert die Geldkassette 1 Geldscheine (in der Fig. 4 nicht dargestellt) der Währung EURO und der Denomination 50. Ferner wird die Seriennummer der Geldkassette 1 angezeigt. Wie gesagt kann die Seriennummer mit der Identifikationsnummer des NFC-Tags identisch sein, das als Teil des Senderempfängers in der Geldkassette 1 vorgesehen ist.

### Bezugszeichenliste

- 1, 1-A, 1-B: Geldkassette

- 11, 11-A, 11-B: Lagermodul
- 111, 111-A, 111-B: Geldscheine
- 112, 112-A, 112-B: Haltemittel
- 12, 12-A, 12-B: Interne Steuereinrichtung
- 121, 121-A, 121-B: Datenspeicher
- 122, 122-A, 122-B: Füllstandssensor
- 13, 13-A, 13-B: NFC-Senderempfänger
- 131, 131-A, 131-B: NFC-Tag
- 132, 132-A, 132-B: Erster Ladestrom
- 14, 14-A, 14-B: Geldscheinausgabemittel
- 15, 15-A, 15-B: Entwertungsmittel
- 16, 16-A, 16-B: Internes Transformatormittel
- 161, 161-A, 161-B: Externes elektromagnetisches Feld
- 162, 162-A, 162-B: Zweiter Ladestrom
- 17, 17-A, 17-B: Energiespeichereinheit
- 18, 18-A, 18-B: Gehäuse der Geldkassette

- 2: Geldautomat
- 21: Steuereinheit, die in einem Geldautomaten integriert ist
- 22: Geldscheintransportmittel
- 23, 23-A, 23-B: NFC-Kommunikationsschnittstelle
- 231-A, 231-B, 231-C, 231-D: Antennen
- 232: Multiplexer
- 2321: Multiplexersteuersignal
- 233: NFC-Chip
- 24-A, 24-B: Aufnahmeeinrichtung
- 26: Stromversorgung
- 261-A, 261-B: Externe Transformatormittel
- 27: Ein-Ausgabemittel
- 28: Gehäuse des Geldautomaten
- 29: Benutzerschnittstelle

- 3: Steuereinheit in Gestalt eines mobilen Endgeräts
- 31: Anzeigemittel

- 4, 4-A, 4-B: Daten
- 41: Abstand

## Patentansprüche

1. Geldkassette (1), die für eine mechanische und kommunikationstechnische Installation in einem Geldautomaten (2) ausgestaltet ist, aufweisend
- ein Lagermodul (11), das zum Lagern einer Anzahl von Geldscheinen (111) ausgestaltet ist,
- eine in der Geldkassette (1) angeordnete interne Steuereinrichtung (12) zum Steuern der Geldkassette (1), und
- einen Senderempfänger (13), der an die interne Steuereinrichtung (12) gekoppelt ist und ausgebildet ist, Daten (4) drahtlos an eine Kommunikationsschnittstelle (23) einer außerhalb der Geldkassette (1) befindlichen externen Steuereinheit (21; 3) zu übermitteln und von dieser zu empfangen,
**dadurch gekennzeichnet, dass**
der Senderempfänger (13) ausgebildet ist, die Daten (4) gemäß dem Near-Field-Communication-Übertragungsstandard zu übermitteln und zu empfangen.

2. Geldkassette (1) nach Anspruch 1, **dadurch gekennzeichnet, dass** die interne Steuereinrichtung (12) ausgebildet ist,
- Zustandsinformationen betreffend einen Zustand der Geldkassette (1), wie beispielsweise die Anzahl und/oder eine Denomination der gelagerten Geldscheine (111), zu ermitteln, und
- einen Auslesebefehl der externen Steuereinheit (21; 3) über den Senderempfänger (13) zu empfangen und auf den Empfang des Auslesebefehls hin Daten (4), die indikativ für die Zustandsinformationen sind, mittels des Senderempfängers (13) an die Kommunikationsschnittstelle (23) zu übermitteln.

3. Geldkassette (1) nach Anspruch 1 oder 2, **dadurch gekennzeichnet, dass** die interne Steuereinrichtung (12) einen wiederbeschreibbaren Datenspeicher (121) aufweist, der ausgebildet ist, empfangene Daten (4) und/oder zu übermittelnde Daten (4) zu speichern.

4. Geldkassette (1) nach einem der vorstehenden Ansprüche, **dadurch gekennzeichnet, dass** die Geldkassette (1) ferner ein Geldscheinausgabemittel (14) umfasst, das für eine Ankopplung an ein Geldscheintransportmittel (22) des Geldautomaten (2) und zur Ausgabe einer bestimmten Anzahl der Geldscheine (111) an das Geldscheintransportmittel (22) ausgestaltet ist, wobei die interne Steuereinrichtung (12) ausgebildet ist,
- einen Geldausgabebefehl der externen Steuereinheit (21) über den Senderempfänger (13) zu empfangen und auf den Empfang des Geldausgabebefehls hin die bestimmte Anzahl der Geldscheine (111) an das Geldscheintransportmittel (22) des Geldautomaten (2) auszugeben.

5. Geldkassette (1) nach einem der vorstehenden Ansprüche, **dadurch gekennzeichnet, dass** der Senderempfänger (13) ausgebildet ist,
- ein externes Hochfrequenzsignal (234) gemäß dem Near-Field-Communication-Übertragungsstandard zu empfangen,
- das empfangene Hochfrequenzsignal (234) in einen ersten Ladestrom (132) zu wandeln, und
- den ersten Ladestrom zur Energieversorgung bereitzustellen.

6. Geldkassette (1) nach einem der vorstehenden Ansprüche, **dadurch gekennzeichnet, dass** die interne Steuereinrichtung (12) ein Kryptographiemittel umfasst, das ausgebildet ist, empfangene Daten (4) zu entschlüsseln und zu übermittelnde Daten (4) zu verschlüsseln.

7. Geldkassette (1) nach einem der vorstehenden Ansprüche, **dadurch gekennzeichnet, dass** die Geldkassette (1) ferner ein Entwertungsmittel (15) aufweist, das ausgebildet ist, die gelagerte Anzahl von Geldscheinen (111) zu entwerten, wobei die interne Steuereinrichtung (12) ausgebildet ist, mittels des Senderempfängers (13) einen Entwertungsbefehl zu empfangen und auf den Empfang des Entwertungsbefehls hin das Entwertungsmittel (15) zu veranlassen, die Anzahl von Geldscheinen (111) zu entwerten.

8. Geldkassette (1) nach Anspruch 7, **dadurch gekennzeichnet, dass die** interne Steuereinrichtung (12) einen Füllstandssensor (122) aufweist, der ausgebildet ist, einen Füllstand des Entwertungsmittels (15), einen Füllstand einer Energiespeichereinheit (17) und/oder eine aktuelle Menge von in der Geldkassette gelagerten Geldscheinen (11) zu detektieren.

9. Geldkassette (1) nach einem der vorstehenden Ansprüche, **dadurch gekennzeichnet, dass** der Senderempfänger (13) ausgebildet ist, die Daten (4) gemäß dem Near-Field-Communication-Übertragungsstandard nur dann zu übermitteln und zu empfangen, wenn ein Abstand (41) zwischen dem Senderempfänger (13) der Geldkassette (1) und der Kommunikationsschnittstelle (23) der externen Steuereinheit (21; 3) kleiner ist als ein Mindestabstand, wie einige Zentimeter.

10. Geldkassette (1) nach einem der vorstehenden Ansprüche, **dadurch gekennzeichnet, dass** der Senderempfänger (13) ein Near-Field-Communication-Tag (131) umfasst.

11. Geldkassette (1) nach einem der vorstehenden Ansprüche, **dadurch gekennzeichnet, dass** die Geldkassette (1) ferner ein internes Transformatormittel (16) aufweist, das ausgebildet ist, ein externes elektromagnetisches Feld (161) in einen zweiten Ladestrom (162) zu wandeln und einer Energiespeichereinheit (17) der Geldkassette (1) zuzuführen.

12. Geldautomat (2), aufweisend eine Aufnahmeeinrichtung (24-A, 24B) zur Aufnahme einer Anzahl von Geldkassetten (1-A, 1-B) gemäß einem der vorstehenden Ansprüche und eine Steuereinheit (21), die ausgebildet ist, mittels einer an die Steuereinheit (21) gekoppelten Kommunikationsschnittstelle (23; 23-A, 23-B) des Geldautomaten (2) Daten (4) drahtlos an die Senderempfänger (13-A, 13-B) der Geldkassetten (1-A, 1-B) zu übermitteln und von diesen zu empfangen,
**dadurch gekennzeichnet, dass**
die Steuereinheit (21) des Geldautomaten ausgebildet ist, die Daten (4) mittels der Kommunikationsschnittstelle (23; 23-A, 23-B) gemäß dem Near-Field-Communication-Übertragungsstandard zu übermitteln und zu empfangen.

13. Geldautomat (2) nach Anspruch 12, **dadurch gekennzeichnet, dass** die Kommunikationsschnittstelle (23) zu den Senderempfängern (13) der Anzahl von Geldkassetten (1-A; 1-B) kompatibel ist.

14. Geldautomat (2) nach Anspruch 12 oder 13, **dadurch gekennzeichnet, dass** die Kommunikationsschnittstelle (23) Antennen (231-A, 231-B, 231-C, 231-D) zum Übermitteln und Empfangen der Daten aufweist, wobei jeder Antennen (231-A, 231-B, 231-C, 231-D) jeweils eine der Anzahl von Geldkassetten (1-A; 1-B; 1-C; 1-D) zugeordnet ist und die Antennen (231-A, 231-B, 231-C, 231-D) mittels eines Multiplexers (232) an die Steuereinheit (21) gekoppelt sind.

15. Verfahren zum Übertragen von Daten (4) zwischen einem Senderempfänger (23) einer Geldkassette (1), die für eine mechanische und kommunikationstechnische Installation in einem Geldautomaten (2) ausgestaltet ist, und einer Kommunikationsschnittstelle (23) einer außerhalb der Geldkassette (1) befindlichen externen Steuereinheit (21; 3),
**dadurch gekennzeichnet, dass**
die Daten (4) gemäß dem Near-Field-Communication-Übertragungsstandard übertragen werden.
